# EUROPÄISCHE PATENTSCHRIFT

(11) **EP 2 661 554 B1**
(45) Veröffentlichungstag und Bekanntmachung des Hinweises auf die Patenterteilung: **20.04.2016**
(21) Anmeldenummer: 11808204.9
(22) Anmeldetag: 22.12.2011
(51) Int. Cl.: F03D 9/00, F03D 15/00, F03D 80/00, H02K 7/18

(54) **WINDENERGIEANLAGE**
WIND ENERGY PLANT
ÉOLIENNE

(30) Priorität: 05.01.2011 DE 102011008029
(43) Veröffentlichungstag der Anmeldung: 13.11.2013
(73) Patentinhaber: Nordex Energy GmbH, 22419 Hamburg (DE)
(72) Erfinder: RITSCHEL, Uwe, 18230 Zweedorf (DE); GUTZMER, Robert, 18059 Rostock (DE); HARTMANN, Ulrich, 14197 Berlin (DE); JÖCKEL, Andreas, 90408 Nürnberg (DE); ELENDER, Gunther, 94081 Fürstenzell (DE); MÖHLE, Axel, 12163 Berlin (DE)
(74) Vertreter: Epping - Hermann - Fischer
(86) Internationale Anmeldenummer: PCT/EP2011/073773
(87) Internationale Veröffentlichungsnummer: WO 2012/093037

(56) Entgegenhaltungen:
- EP-A1- 2 143 942
- EP-B1- 1 327 073
- WO-A1-01/94779
- US-A- 4 757 211
- US-A1- 2010 314 882

## Beschreibung

Es wird eine Windenergieanlage angegeben.

In der Druckschrift WO 01/94779 A1 wird eine Windenergieanlage beschrieben, die einen Turmkopf aufweist, an dem eine Turbine drehbar befestigt ist. Die Turbine treibt über eine zweiteilige, mit einer Kupplung versehene Achse einen an einem entgegengesetzten Ende des Turmkopfs angeordneten Innenläufer-Generator an.

In der Druckschrift EP 1 327 073 B1 ist eine Windenergieanlage beschrieben, die in einem Maschinenträger eine doppelt gelagerte Rotorwelle und eine Generatorwelle aufweist, die integral mit der Rotorwelle ausgebildet oder mit dieser starr verbunden ist, so dass beide Wellen unter der Wirkung von Biegemomenten einer gemeinsamen Biegebewegung folgen. Der Generator ist als Innenläufer ausgebildet, Stator und Läufer sind auf der drehbaren Rotor- und Generatorwelle so gelagert, dass der Generator Biegebewegungen der Antriebswelle folgen kann. Eine nicht drehbare Kupplung fixiert den Stator des Generators gegen Drehbewegungen am Maschinenträger und erlaubt es, dass der Generator den Biegebewegungen der Antriebswelle relativ zum Maschinenträger folgen kann, wodurch ein konstanter Luftspalt zwischen dem Läufer und dem Stator des Generators ermöglicht werden soll. Eine derartige Ausgestaltung und Befestigung des Generators ist konstruktiv sehr aufwändig, wodurch ein hohes Gewicht der Windenergieanlage im Verhältnis zur erzeugten Leistung folgen kann.

Zumindest eine Aufgabe von bestimmten Ausführungsformen ist es, eine Windenergieanlage anzugeben, die einen einfacheren Aufbau ermöglicht.

Diese Aufgabe wird durch einen Gegenstand mit den Merkmalen des unabhängigen Patentanspruchs gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Gemäß der Erfindung weist eine Windenergieanlage einen Maschinenträger auf. Der Maschinenträger kann insbesondere auf einem Turm drehbar gelagert angeordnet sein.

Weiterhin weist die Windenergieanlage einen Rotor auf. Der Rotor, der am Maschinenträger drehbar um eine Rotornabe gelagert sein kann, dient dazu, die Bewegungsenergie des Windes in eine Rotationsenergie umzuwandeln und zumindest über eine Rotorwelle an einen Generator zu übertragen. Weiterhin weist die Windenergieanlage einen Generator auf, der die Rotationsenergie über eine Generatorwelle aufnehmen kann und in elektrische Energie umwandeln kann.

Weiterhin sind der Rotor und der Generator an gegenüberliegenden Seiten des Maschinenträgers angeordnet, was beispielsweise den Vorteil einer besseren Gewichtsverteilung der Massen des Maschinenträgers, des Rotors und des Generators im Vergleich zu Windenergieanlagen aufweist, bei denen der Generator zwischen dem Turm beziehungsweise Maschinenträger und dem Rotor angeordnet ist. Diese bessere Verteilung der Turmkopfmasse führt zu einer geringeren Materialbeanspruchung und zu einem reduziertem Wartungsaufwand sowie einer höheren Verfügbarkeit der Windenergieanlage. Darüber hinaus kann sich eine höhere Modularität der Windenergieanlage und damit ein reduzierter Wartungs- und/oder Reparaturaufwand ergeben, da beispielsweise der Generator ohne Demontage des Rotors von der Anlage entfernt werden kann.

Weiterhin weist die Windenergieanlage eine Kupplung auf, die zwischen der Rotorwelle und der Generatorwelle angeordnet ist und die die Rotorwelle und die Generatorwelle aneinander koppelt, so dass die Drehbewegung der Rotorwelle an die Generatorwelle übertragen werden kann. Die Rotorwelle und die Generatorwelle sind mittels der Kupplung getriebelos aneinander gekoppelt. Mit anderem Worten kann dadurch eine Drehbewegung der Rotorwelle direkt und ohne zwischengeschaltetes Getriebe an die Generatorwelle übertragen werden.

Im Vergleich zu bekannten Windenergieanlagen mit zwischengeschaltetem Getriebe entfallen dadurch mit Vorteil der Wartungs- und Reparaturaufwand für das Getriebe sowie ein durch den Getriebeverschleiß bedingter Getriebewechsel während der gesamten Betriebszeit der Windenergieanlage.

Weiterhin ist der Generator als Außenläufer ausgebildet. Der Generator weist dazu einen Stator sowie einen Läufer auf, der außen um den Stator herum drehbar angeordnet ist. Im Vergleich zu bekannten Windenergieanlagen, die als Innenläufer ausgebildete Generatoren aufweisen, kann es mit Vorteil möglich sein, bei nahezu gleichem Gewicht höhere Generatorleistungen zu erreichen, wodurch sich ein wirtschaftlicherer Betrieb ergeben kann.

Gemäß einer weiteren bevorzugten Ausführungsform überträgt die Kupplung Drehbewegungen der Rotorwelle an die Generatorwelle, während die Generatorwelle durch die Kupplung von Biegebewegungen der Rotorwelle zumindest teilweise entkoppelt ist. Derartige Biegebewegungen können durch Kräfte hervorgerufen werden, die beispielsweise am Rotor beziehungsweise der Rotornabe durch unterschiedliche Windverhältnisse an den Rotorblättern auftreten. Für einen dauerhaften Betrieb ist es unerlässlich sicherzustellen, dass sich die Biegebewegungen nicht derart zum Generator fortsetzen, dass der Abstand beziehungsweise Luftspalt zwischen Erreger und Abnehmer des Generators, die am Stator beziehungsweise am Läufer angeordnet sind, verändert wird. Durch die zumindest teilweise mechanische Entkopplung der Rotorwelle von der Generatorwelle, die beispielsweise durch eine Beweglichkeit der Kupplung in einer oder mehreren Ebenen parallel zu den Achsen der Rotorwelle und der Generatorwelle erreicht werden kann, kann mit Vorteil erreicht werden, dass eine Übertragung von Biegebewegungen von der Rotorwelle auf die Generatorwelle vermindert oder ganz verhindert werden kann. Beispielsweise kann die Kupplung eine Verkippung und/oder Verschiebung der Achse der Rotorwelle relativ zur Achse der Generatorwelle zulassen.

Besonders bevorzugt ist die Kupplung derart ausgebildet, dass im Wesentlichen, also zu einem überwiegenden Maße, nur Drehbewegungen um die Achse der Rotorwelle auf die Generatorwelle übertragen werden, während Biegebewegungen der Rotorwelle nicht oder nur in einem sehr geringen Maße auf die Generatorwelle übertragen werden.

Weiterhin ist die Generatorwelle an einer dem Rotor abgewandten Rückseite des Generators über eine Verbindung, bevorzugt eine Flanschverbindung oder eine Schweißverbindung, befestigt. Weiterhin kann die Generatorwelle durch die Verbindung mit der Rückseite des Generators im Wesentlichen vom Generator getragen werden. Mit anderen Worten kann sich die Generatorwelle an der Rückseite des Generators derart abstützen, dass keine weiteren Elemente zur Lagerung oder Befestigung der Generatorwelle vorhanden sein müssen. Insbesondere kann es möglich sein, dass die Kupplung im Wesentlichen keine tragende Wirkung auf die Generatorwelle haben muss und im Wesentlichen nur eine Durchbiegung der Generatorwelle unter ihrem Eigengewicht verhindert. Im Vergleich dazu weisen bekannte Windenergieanlagen oft Generatorwellen auf, die den Generator zumindest teilweise tragen und auf denen sich der Generator zumindest teilweise abstützt. Dabei muss die Generatorwelle beispielsweise am Maschinenträger stabil sein und für große Lasten ausgelegt gelagert sein.

Insbesondere kann die Generatorwelle direkt an der Kupplung und der Verbindung an der Rückseite des Generators angeordnet und mit diesen verbunden sein und dazwischen berührungslos von der Kupplung durch den Generator hindurch oder durch den Generator und einen Teil des Maschinenträgers hindurch bis zur Rückseite des Generators ragen. Mit Vorteil kann zwischen der Generatorwelle und dem Generator beziehungsweise zwischen der Generatorwelle und dem Maschinenträger ein Spalt vorgesehen sein, so dass sich die Generatorwelle berührungsfrei innerhalb des Spalts relativ zum Maschinenträger bewegen kann.

Weiterhin kann die Generatorwelle als Hohlwelle ausgebildet sein. Dies kann insbesondere dadurch möglich sein, dass die Generatorwelle keine tragende Funktion in der Windenergieanlage hat, wodurch die Dimensionierung der Generatorwelle gewichtsoptimiert ausgelegt sein kann. So kann beispielsweise ein Verhältnis der äußeren Abmessungen wie etwa Länge und/oder Durchmesser der Generatorwelle im Verhältnis zur Wandstärke derart ausgebildet sein, dass sich die Generatorwelle unter ihrem eigenen Gewicht sowie beispielsweise auch unter dem Gewicht von Servicepersonal gerade nicht verbiegt. Insbesondere kann das Verhältnis von Durchmesser zu Wandstärke größer oder gleich 10:1, bevorzugt größer oder gleich 20:1 und besonders bevorzugt größer oder gleich 100:1 sein. Weist die Generatorwelle beispielsweise einen Durchmesser von etwa 2 m auf, kann die Wandstärke sehr viel geringer sein und besonders bevorzugt im Bereich von größer oder gleich 2 cm und kleiner oder gleich 5 cm liegen.

Gemäß einer weiteren Ausführungsform ist die Windenergieanlage als getriebelose, direkt angetriebenen Windenergieanlage ausgebildet, bei der der Generator bezüglich des Turmes und/oder des Maschinenträgers auf der gegenüberliegenden Seite der Rotornabe beziehungsweise des Rotors angeordnet ist und bei der der Generator als Außenläufer ausgebildet ist. Weiterhin kann die Übertragung von Biegemomenten von der Rotorwelle auf die Generatorwelle weitestgehend vermieden werden.

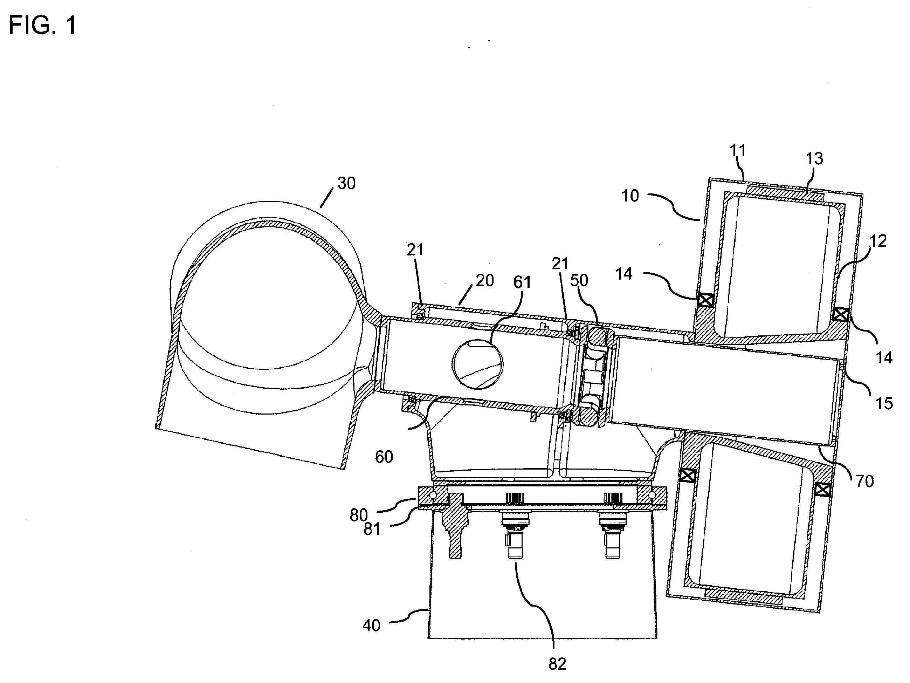

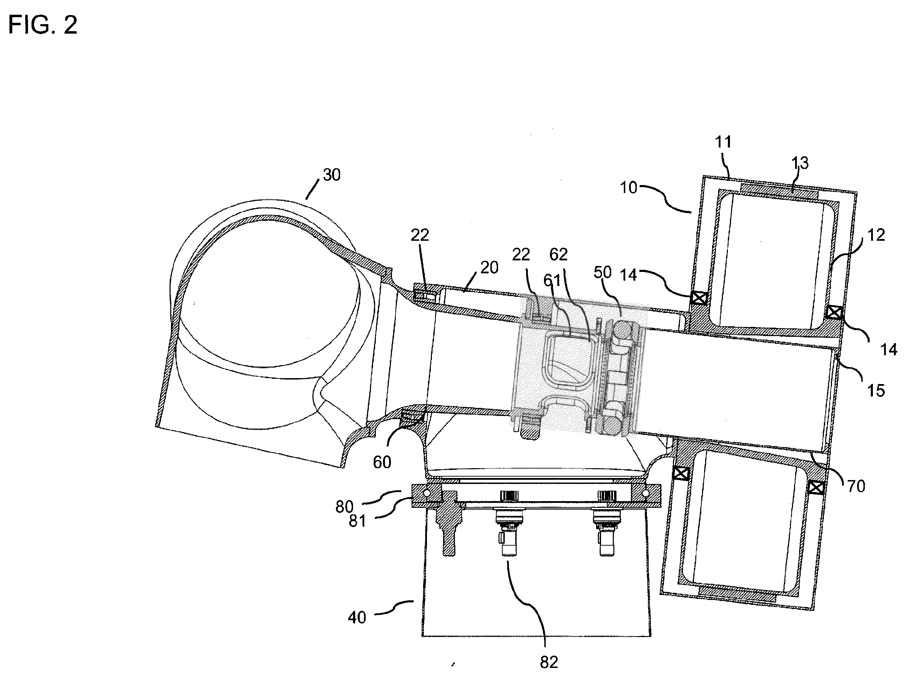

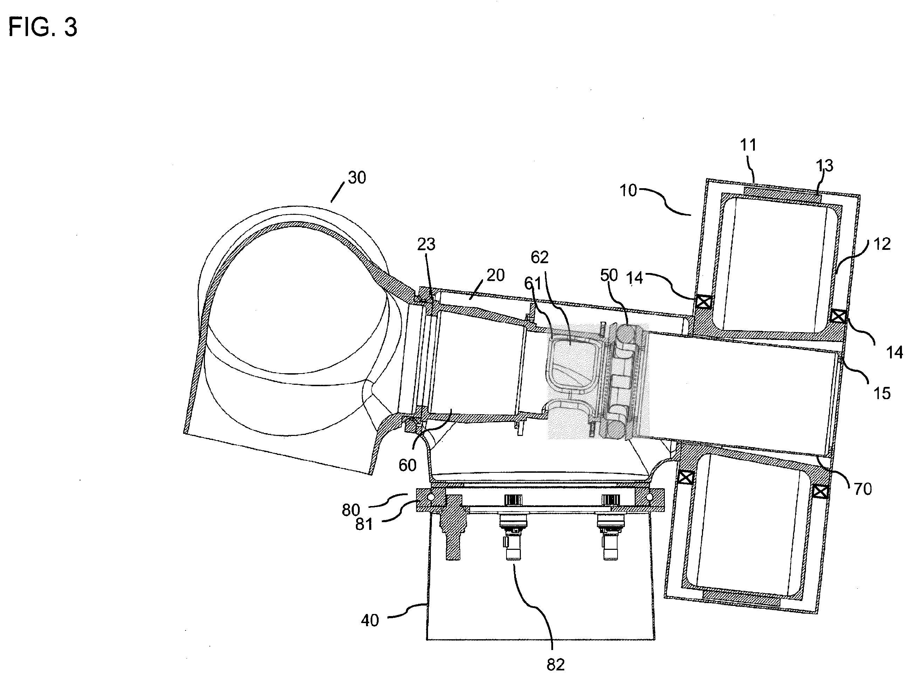

Weitere Vorteile und vorteilhafte Ausführungsformen und Weiterbildungen der Erfindung ergeben sich aus den im Folgenden in Verbindung mit den Figuren 1 bis 3 beschriebenen Ausführungsformen.

Dabei zeigen die Figuren 1 bis 3 schematische Schnittdarstellungen von Windenergieanlagen gemäß mehreren Ausführungsbeispielen.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente zur besseren Darstellbarkeit und/oder zum besseren Verständnis übertrieben dick oder groß dimensioniert dargestellt sein.

Die folgende Beschreibung bezieht sich, soweit nicht explizit darauf hingewiesen wird, auf alle Figuren 1 bis 3.

In den Figuren 1 bis 3 sind Ausführungsbeispiele für jeweils eine Windenergieanlage gezeigt, die als direkt angetriebene Windenergieanlage ausgebildet ist, deren Triebstrang einen modularen Aufbau aufweist und bei welcher der Generator bezüglich des Turms auf der der Rotornabe gegenüber liegenden Seite angeordnet ist.

Die Windenergieanlage weist wenigstens einen Generator 10 und eine Rotornabe 30 eines Rotors mit wenigstens einem oder mehreren Rotorblättern (nicht gezeigt) auf, der an einem Maschinenträger 20 angebracht ist.

Die Windenergieanlage weist weiterhin einen Turm 40 auf, auf dem der Maschinenträger 20 drehbar angeordnet ist. Der Maschinenträger 20 ist gegenüber dem Turm 40 mittels einer Azimutdrehverbindung 80 in einem Azimutlager 81 drehbar gelagert, so dass die Rotornabe 30 mit den daran befestigten Rotorblättern unter Verwendung wenigstens eines Azimutantriebs 82, der in eine am Azimutlager 81 vorhandene Verzahnung eingreift, in ihrer horizontalen Orientierung der Windrichtung nachgeführt werden kann. Wahlweise kann der Maschinenträger 20 am Außen- oder am Innenring des Azimutlagers 81 verschraubt werden.

Die Rotornabe 30 ist an einer als Hohlwelle ausgeformten Rotorwelle 60 befestigt und drehbar in wenigstens einem Lager 21, 22, 23 gegenüber dem Maschinenträger 20 gelagert.

Weiterhin weist die Windenergieanlage eine als Hohlwelle ausgeformte Generatorwelle 70 sowie eine Kupplung 50 auf, durch welche die Rotorwelle 60 und die Generatorwelle 70 miteinander verbunden sind.

Der Generator 10 ist als Außenläufer mit einem außen liegenden Läufer 11, der auch als Rotor des Generators bezeichnet werden kann, und einem innen liegenden Stator 12 ausgebildet.

Der Stator 12 ist mit dem Maschinenträger 20 starr verbunden. Besonders bevorzugt ist der Stator 12 und damit der Generator 10 durch eine Flanschverbindung gehalten.

Der Läufer 11 ist mittels Lagern 14, die zwischen Stator 12 und Läufer 11 angeordnet sind, drehbar am Stator 12 gelagert. Wie in den Figuren gezeigt weisen der Stator 12 eine Außenwand und der Läufer 11 eine Innenwand auf, zwischen denen zwei Lager 14 derart angeordnet sind, dass der Stator 12 bezüglich einer Drehachse des Läufers 11 zwischen den Lagern 14 angeordnet ist. Der Stator 12 ist dazu besonders bevorzugt vorgesehen zwei Lager 14 aufzunehmen, deren innere Lagerringe am Stator 12 und deren äußere Lagerringe am Läufer 11 so befestigt sind, dass der Läufer 11 gegenüber dem Stator 12 drehbar gelagert ist. Besonders bevorzugt sind generatorseitig, also auf der dem Generator 10 zugewandten Seite der Kupplung 50 die zwei Lager 14 als einzige Lager vorgesehen.

Weiterhin weist der Läufer 11 eine vom Maschinenträger 20 abgewandt angeordnete Rückseite, eine Mantelseite und eine dem Maschinenträger zugewandte Vorderseite mit einer Öffnung auf und umschließt den Stator bis auf die Öffnung allseitig. Die Öffnung weist einen Durchmesser auf, der kleiner oder gleich einem Außendurchmesser eines an der Öffnung angeordneten Lagers 14 zwischen dem Stator 12 und dem Läufer 11 ist.

Die Generatorwelle 70 ist auf der dem Maschinenträger 20 gegenüberliegenden beziehungsweise abgewandten Seite, also der Rückseite des Generators 10, durch eine Verbindung 15 mit dem Läufer 11 des Generators 10 in einer solchen Weise verbunden, dass die Generatorwelle 70 im Wesentlichen in den Lagern 14 auf dem Stator 12 gelagert ist. Die Verbindung 15 ist beispielsweise als Flanschverbindung oder als Schweißverbindung ausgebildet.

Die Kupplung 50 ist im Wesentlichen torsionssteif und axial sowie radial relativ weich ausgebildet, so dass im Wesentlichen nur Drehmomente von der Rotorwelle 60 auf die Generatorwelle 70 übertragen werden, und kann beispielsweise als hydraulische Elastomer-Kupplung ausgebildet sein.

Rotorwelle 60 und Generatorwelle 70 sind aus Masse- und Servicegründen bevorzugt mit einem großen Wellendurchmesser und geringen Wandstärken realisiert. In einer bevorzugten Ausführung beträgt der Durchmesser der Rotorwelle 60 und Generatorwelle 70 beispielsweise 2 m.

Die Rotorwelle 60 kann bevorzugt wenigstens eine radiale Öffnung 61 aufweisen, die als Zugang zur Rotornabe für Wartungsarbeiten dienen kann. Über die Kupplung 50 kann von der Rotorwelle 60 auch die Generatorwelle 70 betretbar sein.

Der umliegende Bereich der wenigstens einen Öffnung 61 der Rotorwelle 60 kann mit versteifenden Elementen 62 versehen sein.

Darüber hinaus weist die Rotorwelle 60 bevorzugt einen Flansch zum Befestigen eines Schleifrings auf (nicht gezeigt), über welchen eine elektrische Versorgung von sowie eine Kommunikation mit in der Rotornabe 30 befindlichen Komponenten, wie beispielsweise den Blattverstellantrieben (nicht gezeigt), realisiert werden kann.

Ein weiterer Flansch (nicht gezeigt) im der Rotornabe 30 zugewandten Bereich der Rotorwelle 60 kann dazu dienen, ein Rotor-Lock-System zum Arretieren der Rotornabe 30 sowie der Rotorwelle 60 gegen den Maschinenträger 20 aufzunehmen.

Ein weiterer Flansch (nicht gezeigt) im der Kupplung 50 zugewandten Bereich der Rotorwelle 60 kann dazu dienen, eine Haltebremse zum Abbremsen der Rotornabe 30 sowie der Rotorwelle 60 gegen den Maschinenträger 20 aufzunehmen.

Zur optimalen mechanischen Anbindung von Rotornabe 30 und Generator 10 kann der Maschinenträger 20 im unteren Bereich kegelstumpfförmig (vertikal) und im oberen Bereich rohrförmig (im Wesentlichen entlang der Achse der Rotorwelle 20 und/oder der Generatorwelle 70 ausgerichtet) ausgeformt sein. Dadurch kann der Maschinenträger 20 generatorseitig als Flansch zum Verschrauben des Generators 10 ausgebildet sein. Nabenseitig kann der Maschinenträger 20 rohrförmig als klassischer Lagersitz oder als Flansch für anschraubbare Lager ausformt sein.

Aufgrund der Rohrform eignet sich eine solche Ausführung sehr gut für die Verwendung von Momentenlagern. Verschiedene Beispiele für die Ausführung der Lager 21, 22, 23 sind in den Figuren dargestellt. Figur 1 zeigt eine direkt angetriebene Windenergieanlage, bei welcher die Lager 21 der Rotorwelle 60 als einreihige Kegelrollenlager ausgebildet sind, Figur 2 zeigt eine direkt angetriebene Windenergieanlage, bei welcher die Lager 22 der Rotorwelle 60 als Pendelrollenlager ausgebildet sind, Figur 3 zeigt eine direkt angetriebene Windenergieanlage, bei welcher das Lager 23 der Rotorwelle 60 als ein Momentenlager ausgebildet ist.

Der Generator 10 ist bevorzugt als permanent-erregter Synchrongenerator ausgeformt und der Stator 12 mit einer Statorwicklung 13 versehen. Im der Statorwicklung 13 zugewandten Innenbereich des Läufers 11 sind Permanentmagnete (nicht gezeigt) befestigt, die üblicherweise nur wenige 1 bis wenige 10 mm stark sind.

Die Generatorwelle 70 wird wie oben beschrieben im Wesentlichen indirekt über den Stator 12, die Lager 14 und den Läufer 11 vom Maschinenträger 20 getragen, wobei die Generatorwelle 70 zusammen mit dem Stator 12 und dem Läufer 11 Biegebewegungen des Maschinenträgers 20 folgen kann, ohne dass sich der Luftspalt zwischen Erreger am Läufer 11 und Statorwicklungen 13 ändert.

Unter der Verwendung der beschriebenen Merkmale lässt sich beispielsweise eine direkt angetriebene Windenergieanlage mit einer Nennleistung von mehreren MW fertigen, die ein vorteilhaftes Verhältnis von Turmkopfmasse und Nennleistung aufweist.

Durch eine Ausführung des Generators als Außenläufer sind gegenüber einem als Innenläufer ausgeformten Generator bei nahezu gleichem Gewicht höhere Generatorleistungen realisierbar, wodurch sich ein Kostenvorteil ergibt. Die bessere Verteilung der Turmkopfmasse gegenüber Triebstrangaufbauten, bei welchen der Generator nabenseitig angeordnet ist, führt zu einer geringeren Materialbeanspruchung und dadurch zu einem reduzierten Wartungsaufwand sowie einer höheren Verfügbarkeit der Windenergieanlage. Ein weiterer Vorteil der Erfindung ergibt sich aus der hohen Modularität des Triebstrangaufbaus. Der in sich selbst gelagerte Generator kann nach Lösen der Verbindungsschnittstellen von Maschinenträger und Stator sowie der Kupplung zwischen Rotorwelle und Generatorwelle, sowie der Kabel und Kühlungsleitungen etc., vollständig von der Anlage entfernt werden. Während bei Aufbauten, bei welchen der Generator zwischen Rotornabe und Turm angeordnet ist, für eine Demontage des Generators auch der Rotorstern umfassend Rotornabe und Rotorblätter demontiert werden muss, ist bei der hier beschriebenen Windenergieanlage eine voneinander unabhängige Wartung der Komponenten möglich. Dies führt insbesondere bei Offshore-Windenergieanlagen zu einem nicht unerheblichen Kostenvorteil, da jeweils nur eine Hubinsel beziehungsweise ein Schwimmkran, auch als "jack-up rig" oder "jack-up barge" bezeichnet, für Wartungsarbeiten erforderlich ist. Durch die wenigstens eine radiale Öffnung der Rotorwelle ist es möglich, die Rotornabe für Wartungsarbeiten durch den Maschinenraum von innen zu betreten, was zu einer verbesserten Sicherheit des Wartungs- und Servicepersonals gegenüber einem Betreten der Rotornabe von der Außenseite führt.

## Patentansprüche

1. Windenergieanlage, aufweisend einen Maschinenträger (20) und an einander gegenüberliegenden Seiten des Maschinenträgers (20) einen Rotor und einen Generator (10), wobei der Rotor und der Generator (10) über eine Rotorwelle (60) und eine Generatorwelle (70) und eine dazwischen angeordnete Kupplung (50) getriebelos aneinander gekoppelt sind
**dadurch gekennzeichnet, dass**
der Generator (10) als Außenläufer ausgebildet ist und die Generatorwelle (70) an einer dem Rotor abgewandten Rückseite des Generators (10) über eine Verbindung (15) befestigt ist.

2. Windenergieanlage nach Anspruch 1, wobei die Kupplung (50) Drehbewegungen der Rotorwelle (60) an die Generatorwelle (70) überträgt und die Generatorwelle (70) von Biegebewegungen der Rotorwelle (60) zumindest teilweise entkoppelt.

3. Windenergieanlage nach Anspruch 1 oder 2, wobei die Verbindung (15) eine Flanschverbindung oder eine Schweißverbindung ist.

4. Windenergieanlage nach einem der vorherigen Ansprüche, wobei die Generatorwelle (70) direkt an der Kupplung (50) und der Verbindung (15) an der Rückseite des Generators (10) angeordnet ist und dazwischen berührungslos von der Kupplung (50) durch den Generator (10) hindurch bis zur Rückseite des Generators (10) hindurchragt.

5. Windenergieanlage nach dem vorherigen Anspruch, wobei die Generatorwelle (70) im Wesentlichen durch die Verbindung (15) mit der Rückseite des Generators (10) getragen wird.

6. Windenergieanlage nach einem der vorherigen Ansprüche, wobei die Generatorwelle (70) als Hohlwelle ausgebildet istund ein Verhältnis von Durchmesser zu Wandstärke von größer oder gleich 10:1 aufweist.

7. Windenergieanlage nach einem der vorherigen Ansprüche, wobei der Generator (10) nur vom Maschinenträger (20), bevorzugt durch eine Flanschverbindung, gehalten wird.

8. Windenergieanlage nach einem der vorherigen Ansprüche, wobei der Generator (10) einen Stator (12) und einen Läufer (11) aufweist und der Läufer (11) mittels Lager (14), die zwischen dem Stator (12) und dem Läufer (11) angeordnet sind, drehbar um den Stator (12) herum gelagert ist.

9. Windenergieanlage nach dem vorherigen Anspruch, wobei der Stator (12) eine Außenwand und der Läufer (11) eine Innenwand aufweisen, zwischen denen zwei Lager (14) derart angeordnet sind, dass der Stator (12) bezüglich einer Drehachse des Läufers (11) zwischen den Lagern (14) angeordnet ist.

10. Windenergieanlage nach dem vorherigen Anspruch, wobei die zwei Lager (14) jeweils einen inneren am Stator (12) befestigten Lagerring und einen äußeren am Läufer (11) befestigten Lagerring aufweisen und auf der dem Generator (10) zugewandten Seite der Kupplung (50) als einzige Lager vorgesehen sind.

11. Windenergieanlage nach einem der Ansprüche 8 bis 10, wobei der Generator (10) als permanent-erregter Synchrongenerator ausgebildet ist.

12. Windenergieanlage nach dem vorherigen Anspruch, wobei die Generatorwelle (70) im Wesentlichen durch die Verbindung (15) mit der Rückseite des Generators (10) über den Stator (12), die Lager (14) und den Läufer (11) vom Maschinenträger (20) getragen wird und zusammen mit dem Läufer (11) und dem Stator (12) Biegebewegungen des Maschinenträgers (20) folgen kann, ohne dass sich ein Luftspalt zwischen einem Erreger am Läufer (11) und Statorwicklungen (13) ändert.

13. Windenergieanlage nach einem der Ansprüche 8 bis 12, wobei der Läufer (11) eine vom Maschinenträger (20) abgewandt angeordnete Rückseite, eine Mantelseite und eine dem Maschinenträger (20) zugewandte Vorderseite mit einer Öffnung aufweist und den Stator (12) bis auf die Öffnung allseitig umschließt.

14. Windenergieanlage nach dem vorherigen Anspruch, wobei die Öffnung einen Durchmesser aufweist, der kleiner oder gleich einem Außendurchmesser eines an der Öffnung angeordneten Lagers (14) zwischen dem Stator (12) und dem Läufer (11) ist.

15. Windenergieanlage nach einem der vorherigen Ansprüche, wobei der Generator (10) in sich selbst gelagert ist und nach Lösen der Kupplung (50) sowie von Verbindungsschnittstellen des Maschinenträgers (20) und des Stators (12) vollständig von der Anlage entfernt werden kann.

## Claims

1. Wind turbine, having a machine frame (20) and, on mutually opposite sides of the machine frame (20), a rotor and a generator (10), wherein the rotor and the generator (10) are gearlessly coupled to one another via a rotor shaft (60) and a generator shaft (70) and a coupling arrangement (50) arranged therebetween,
**characterized in that**
the generator (10) has an external-rotor design and the generator shaft (70) is fastened on a rear side of the generator (10), the rear side being remote from the rotor, via a connection (15).

2. Wind turbine according to Claim 1, wherein the coupling arrangement (50) transmits rotary movements of the rotor shaft (60) to the generator shaft (70) and at least partially decouples the generator shaft (70) from bending movements of the rotor shaft (60).

3. Wind turbine according to Claim 1 or 2, wherein the connection (15) is a flange connection or a welded joint.

4. Wind turbine according to one of the preceding claims, wherein the generator shaft (70) is arranged directly at the coupling arrangement (50) and the connection (15) on the rear side of the generator (10) and protrudes therebetween, without any touching contact, from the coupling arrangement (50) through the generator (10) as far as the rear side of the generator (10).

5. Wind turbine according to the preceding claim, wherein the generator shaft (70) is borne substantially by the connection (15) to the rear side of the generator (10).

6. Wind turbine according to one of the preceding claims, wherein the generator shaft (70) is in the form of a hollow shaft and has a ratio of diameter to wall thickness of greater than or equal to 10:1.

7. Wind turbine according to one of the preceding claims, wherein the generator (10) is held only by the machine frame (20), preferably by a flange connection.

8. Wind turbine according to one of the preceding claims, wherein the generator (10) has a generator stator (12) and a generator rotor (11), and the generator rotor (11) is mounted rotatably about the generator stator (12) by means of bearings (14), which are arranged between the generator stator (12) and the generator rotor (11).

9. Wind turbine according to the preceding claim, wherein the generator stator (12) has an outer wall and the generator rotor (11) has an inner wall, with two bearings (14) being arranged between said outer and inner walls in such a way that the generator stator (12) is arranged between the bearings (14) with respect to an axis of rotation of the generator rotor (11).

10. Wind turbine according to the preceding claim, wherein the two bearings (14) each have an inner bearing ring fastened on the generator stator (12) and an outer bearing ring fastened on the generator rotor (11) and are provided as the only bearings on that side of the coupling arrangement (50) which faces the generator (10).

11. Wind turbine according to one of Claims 8 to 10, wherein the generator (10) is in the form of a permanent magnet synchronous generator.

12. Wind turbine according to the preceding claim, wherein the generator shaft (70) is borne by the machine frame (20) substantially by the connection (15) to the rear side of the generator (10) via the generator stator (12), the bearings (14) and the generator rotor (11) and can follow bending movements of the machine frame (20), together with the generator rotor (11) and the generator stator (12), without an air gap between an exciter on the generator rotor (11) and stator windings (13) being changed.

13. Wind turbine according to one of Claims 8 to 12, wherein the generator rotor (11) has a rear side, which is arranged remote from the machine frame (20), a lateral surface side and a front side facing the machine frame (20) with an opening and surrounds the generator stator (12) on all sides apart from the opening.

14. Wind turbine according to the preceding claim, wherein the opening has a diameter which is less than or equal to an outer diameter of a bearing (14) arranged at the opening between the generator stator (12) and the generator rotor (11).

15. Wind turbine according to one of the preceding claims, wherein the generator (10) is mounted in itself and once the coupling arrangement (50) and connection interfaces between the machine frame (20) and the generator stator (12) have been detached, can be removed completely from the turbine.

## Revendications

1. Eolienne, présentant un support de machine (20) et un rotor et un générateur (10) sur des côtés opposés l'un à l'autre du support de machine (20), dans laquelle le rotor et le générateur (10) sont couplés l'un à l'autre sans transmission par un arbre de rotor (60) et un arbre de générateur (70) et un accouplement (50) agencé entre eux, **caractérisée en ce que** le générateur (10) est réalisé sous forme d'induit extérieur et l'arbre de générateur (70) est fixé à un côté arrière du générateur (10) situé à l'opposé du rotor au moyen d'un assemblage (15).

2. Eolienne selon la revendication 1, dans laquelle l'accouplement (50) transmet des mouvements de rotation de l'arbre de rotor (60) à l'arbre de générateur (70) et l'arbre de générateur (70) est au moins en partie découplé de mouvements de flexion de l'arbre de rotor (60).

3. Eolienne selon la revendication 1 ou 2, dans laquelle l'assemblage (15) est un assemblage à bride ou un assemblage soudé.

4. Eolienne selon l'une quelconque des revendications précédentes, dans laquelle l'arbre de générateur (70) est agencé directement à l'accouplement (50) et à l'assemblage (15) sur le côté arrière du générateur (10) et s'étend entre ceux-ci sans contact depuis l'accouplement (50) à travers le générateur (10) jusqu'au côté arrière du générateur (10).

5. Eolienne selon la revendication précédente, dans laquelle l'arbre de générateur (70) est porté essentiellement par l'assemblage (15) avec le côté arrière du générateur (10).

6. Eolienne selon l'une quelconque des revendications précédentes, dans laquelle l'arbre de générateur (70) est réalisé sous forme d'arbre creux et présente un rapport du diamètre à l'épaisseur de paroi supérieur ou égal à 10:1.

7. Eolienne selon l'une quelconque des revendications précédentes, dans laquelle le générateur (10) n'est maintenu que par le support de machine (20), de préférence par un assemblage à bride.

8. Eolienne selon l'une quelconque des revendications précédentes, dans laquelle le générateur (10) présente un stator (12) et un rotor (11) et le rotor (11) est monté à rotation autour du stator (12) au moyen de paliers (14), qui sont agencés entre le stator (12) et le rotor (11).

9. Eolienne selon la revendication précédente, dans laquelle le stator (12) présente une paroi extérieure et le rotor (11) présente une paroi intérieure, entre lesquelles deux paliers (14) sont agencés de telle manière que le stator (12) soit agencé entre les paliers (14) par rapport à un axe de rotation du rotor (11).

10. Eolienne selon la revendication précédente, dans laquelle les deux paliers (14) présentent respectivement une bague de palier intérieure fixée au stator (12) et une bague de palier extérieure fixée au rotor (11) et ils sont prévus comme paliers uniques sur le côté de l'accouplement (50) tourné vers le générateur (10).

11. Eolienne selon l'une quelconque des revendications 8 à 10, dans laquelle le générateur (10) est réalisé sous forme de générateur synchrone à excitation permanente.

12. Eolienne selon la revendication précédente, dans laquelle l'arbre de générateur (70) est essentiellement porté par l'assemblage (15) avec le côté arrière du générateur (10), par le support de machine (20) via le stator (12), les paliers (14) et le rotor (11), et il peut suivre des mouvements de flexion du support de machine (20) de concert avec le rotor (11) et le stator (12), sans qu'un entrefer entre un excitateur sur le rotor (11) et des enroulements de stator (13) varie.

13. Eolienne selon l'une quelconque des revendications 8 à 12, dans laquelle le rotor (11) présente un côté arrière disposé à l'opposé du support de machine (20), un côté latéral et un côté avant tourné vers le support de machine (20) avec une ouverture, et il entoure le stator (12) de tous les côtés jusqu'à l'ouverture.

14. Eolienne selon la revendication précédente, dans laquelle l'ouverture présente un diamètre, qui est inférieur ou égal à un diamètre extérieur d'un palier (14) agencé à l'ouverture entre le stator (12) et le rotor (11).

15. Eolienne selon l'une quelconque des revendications précédentes, dans laquelle le générateur (10) est supporté par lui-même et il peut être entièrement démonté de l'installation après séparation de l'accouplement (50) ainsi que des points d'assemblage du support de machine (20) et du stator (12).
